# EUROPEAN PATENT APPLICATION

(11) **EP 4 693 099 A1**
(43) Date of publication of application: **11.02.2026**
(21) Application number: 24306351.8
(22) Date of filing: 09.08.2024
(51) Int. Cl.: G06K 19/077

(54) **SHIELDING PLUG**

(71) Applicant: THALES DIS FRANCE SAS, 92190 Meudon (FR)
(72) Inventor: TIBILETTI, Lucie, 13600 La Ciotat (FR); BRAITHWAITE, Gregory, 13600 La Ciotat (FR); DELLYS, Alexis, 13390 Auriol (FR); SEBAN, Frédérick, 13390 Auriol (FR); DURANO, Frédéric, 13009 Marseille (FR); ODDOU, Laurent, 13390 Auriol (FR)
(74) Representative: Castelo, Jérôme

(57) **Abstract**

A data carrier with a top surface and a bottom surface, said data carrier comprising:
- a metal layer, said metal layer comprising an opening;
- at least one electronic module positioned at least partially within the opening;
- at least one antenna;
- at least one shielding layer disposed between the metal layer and the antenna; and
- a shielding plug disposed within the opening;
wherein the shielding plug comprises a shielding material such that it is configured interfere or impede with RF transmission in order to block or redirect the electromagnetic interference (EMI) generated by the metal layer.

## Description

### TECHNICAL FIELD

The present invention relates to a data carrier according to claim 1, to a secure article comprising or consisting of such a data carrier according to claim 14, and to a method of producing a data carrier according to claim 15.

### PRIOR ART

Data carriers such as smart cards or banking cards typically includes an electronic module such as embedded integrated circuit (IC) chip. These cards communicate with card readers through direct contact or contactless radio frequency (RF) interfaces.

There are three main types of smart cards. The first type is the "contact smart cards", which have an IC chip connected to physical contact pads on the card's surface. They require insertion into a card reader for data transmission. The second type is the contactless smart cards, which have an IC chip and an antenna for wireless communication with a card reader via RF signals, requiring only close proximity to the reader. The third type is dual-interface smart cards, which combine both contact and contactless features, allowing access to the IC chip through either method.

A recent trend in the field of such smart card, notably dual-interface smart card, is the integration of metal in order to improve the appearance and the premium feeling for the end user. A metal layer provides a desirable weight and a decorative pattern and/or reflective surface enhancing the card's appearance and aesthetic value. This is especially desirable for use by high-end customers. It is therefore desirable to make dual interface (contacts and contactless) smart cards having a metal layer. The inclusion of a metal layer in dual-interface smart cards, while aesthetically pleasing, introduces significant challenges related to radio frequency (RF) interference. This interference affects the card's ability to communicate wirelessly with card readers. Indeed, metal layers absorb and reflect RF signals, weakening the signal strength. This attenuation can hinder or completely block the communication between the card's IC chip and the reader's antenna. Furthermore, the metal layer can create complex interference patterns due to multiple reflections within the card's layers. These patterns can cause destructive interference, further weakening the effective signal reaching the IC chip.

A solution known from the state of the art to these interferences consists in incorporating a shielding layer inside dual-interface smart. The shielding layer blocks unwanted RF signals generated by the metal layer by creating a barrier. This barrier block or redirect the electromagnetic interference (EMI) generated by the metal layer, thus protecting the integrity of the RF signals used for contactless communication.

This solution aims to balance the need for a metal layer's aesthetic appeal and the functional requirement for reliable RF communication.

However, these solution from the state of the art are not completely satisfactory and could still be improved in order to further limit RF interferences and to improve the performances of the card.

### SUMMARY OF THE INVENTION

It is an object of the present invention to overcome the drawbacks of the prior art. In particular, it is an object of the present invention to provide an optimized data carrier comprising a metallic layer.

This object is achieved with a data carrier according to claim 1. The invention is defined as being a data carrier with a top surface and a bottom surface, said data carrier comprising a metal layer. The metal layer comprises an opening. The data carrier comprises at least one electronic module positioned at least partially within the opening of the metal layer. The data carrier also comprises at least one antenna. The data carrier further comprises at least one shielding layer disposed between the metal layer and the antenna. Finally, the data carrier comprises a shielding plug disposed within the opening. The shielding plug comprises a shielding material such that it is configured to interfere or impede with RF transmission in order to block or redirect the electromagnetic interference (EMI) generated by the metal layer. The shielding material is non electrically conductive.

The shielding layer is placed below the metal layer, i.e. towards the interior of the card, to act as a shield to prevent or reduce the metal layer from interfering with radio frequency radiation to and from the smart card. The shielding plug allows to reinforce the shielding effect, particularly at the level of the opening of the metal card. Indeed, the lower surface of the metal layer facing the antenna is shielded by the shielding layer. However, the edge formed in the metal layer by the opening, i.e. the metal side walls of the opening, might still be exposed to RF signals from the antenna and/or the reader. The metal side walls of the opening is a weak area in term of RF shielding. By using a shielding plug, said metal side walls of the opening are shielded too, such that the interference between the antenna and the metal layer is further limited and that the performance and reliability of the data carrier is improved.

Another advantage of using a shielding plug as described herein is to increase the weight of the data carrier. Indeed, the use of a shielding material allows to bring more weight to the data carrier as said shielding material is likely to have a higher density than polymers used in the plugs known from the state of the art. Therefore, by using a shielding plug as described in the present invention, the total weight of the data carrier is increased. Increasing card weigh is one of the main objectives in the field of data carrier with metal, notably banking card with metal, as it brings a premium feeling to the end user.

Preferably, the shielding plug has an average density at least equal to 2 g/cm³. As such, the shielding plug brings even more weight to the data carrier.

The shielding layer is preferably made from a nickel-iron soft ferromagnetic alloy such as mu-metal. Mu-metal is known for its high magnetic permeability, which makes it effective in shielding against magnetic fields. More preferably, the shielding material of the shielding layer is ferrite.

Advantageously, the antenna is in physical connection with the electronic module. This configuration allows a non-inductive mode of connection or physical connection mode between the antenna and the electronic module. This physical connection between the antenna and the electronic module can notably be made by using connection means such as wires or silver glue.

Preferably, the shielding layer comprises an opening substantially aligned with the opening of the metal layer according to an extension direction (E) of the data carrier. This opening allows the connection means to connect the antenna and the electronic module.

Advantageously, the metal layer has a top surface which forms the top surface of the data carrier. This configuration with the metal on top allows a highly sophisticated appearance of the data carrier. This premium appearance of the data carrier is of great interest for the end user.

The shielding plug of the data carrier described in the invention can have different structural configurations depending on the requirements. The shielding plug comprises an upper part on which is securely attached the electronic module and a lower part facing the inside of the card. Advantageously, at least the lower part of the plug comprises a shielding material. The lower part of the plug being the part which is potentially more exposed to RF signals coming from the antenna and/or from a card reader, this configuration allows to focus the shielding of metal layer, more specifically the metal side walls of the opening in the metal layer, in the most critical part of it.

Preferably, the lower part of the shielding plug comprising a shielding material has a thickness of at least 20 micrometers. More preferably, the lower part of the shielding plug comprising a shielding material has a thickness of at least 30 micrometer. With such thickness of shielding material in the shielding plug, the shielding plug significantly interfere with radio frequency signals coming from a reader or from the antenna such that the shielding of the upper metal layer is further improved.

According to an alternative embodiment, the whole shielding plug can comprise or be made of shielding material. This would allow for an even more improved shielding of the metal side walls of the opening in the metal layer.

The shielding material of the shielding plug can be any suitable material known from the state of the art, such as notably ferromagnetic metal or ferromagnetic metal alloy. Preferably, the shielding material of the shielding plug is ferrite. The use of ferrite as shielding material of the shielding plug is particularly adapted as this material impede or interfere with unwanted RF signals that could cause electromagnetic interference (EMI). This purposeful impedance is beneficial as it ensures the proper functioning of the data carrier's electronic components by protecting them from external and internal RF noise.

The polymer of the shielding plug can be any suitable material known from the state of the art. Preferably, the polymer of the shielding plug comprises PVC.

The plug material can also comprise alloys of previously mentioned materials. For example, the plug material can comprise ferrite/PVC alloy.

Preferably, the upper part of the shielding plug is made of polymer and the lower part of the shielding plug is made of ferrite. The upper part of the shielding plug is advantageously milled in order to house at least part of the electronic module and securely attach it. Milling polymeric material can be easier than milling a shielding material such as ferromagnetic metal. Therefore, such a configuration of the shielding plug allows an easier manufacturing as the milling of polymer is easily controllable, and at the same time it allows a good shielding as the lower part of the shielding plug, which is potentially more exposed to RF signals coming from the antenna, is made of shielding material. Furthermore, the visually critical part of the shielding plug to mill is its upper part as it is this upper part which is visible to the end user. So if the ferrite is milled in the lower part of the shielding plug, the possible visible defaults are less critical than in the upper part of the shielding plug. Finally, the polymeric upper part of the shielding plug allows an easier attachment of the electronic module.

Advantageously, the lateral dimensions L1 W1 of the opening of the metal layer are substantially equal to the lateral dimensions L2 W2 of the electronic module. In this way, there is no gap between the electronic module and an edge formed in the metal layer by the opening. In other words, the size of the opening of the metal layer corresponds to the size of the electronic module in its upper part, only a top surface of the electronic module being left uncovered by the metal layer. Again in other words, an edge of the metal layer that delimits the opening of the metal layer is arranged immediately adjacent to a circumferential surface of the electronic module in its upper region. This absence of gap between the electronic module and the metal side walls of the opening is visually more pleasant than a configuration where a gap is formed in this area.

Preferably, the electronic module flushes the upper surface of the data carrier.

Advantageously, an expansion area of the metal layer corresponds to an expansion area of the data carrier with respect to a transverse direction (T) running perpendicularly to an extension direction (E) of the data carrier. In other words, the metal layer covers the full surface of the data carrier. This configuration allows to see the metal on the edge of the data carrier, which increase the premium feeling of the end user.

More preferably, an expansion area of the shielding layer corresponds to an expansion area of the metal layer with respect to a transverse direction (T) extending perpendicularly to the extension direction (E). In other words, the shielding layer covers the full surface of the data carrier. This configuration allows to increase the shielding of the metal layer as the surface of the shielding layer is at least equal to the surface of the metal layer.

According to another aspect, the invention concerns a secure article comprising or consisting of at least one data carrier as previously disclosed. The secure article is preferably is a smart card.

According to yet another aspect, the invention concerns a method of producing a data carrier as previously disclosed. The method preferably comprises the steps of:
- providing a metal layer, said metal layer comprising an opening;
- providing at least one electronic module at least partially within the opening;
- providing at least one antenna;
- providing at least one shielding layer between the metal layer and the antenna; and
- providing a shielding plug within the opening;
wherein the shielding plug comprises a shielding material such that it is configured to interfere or impede with radiofrequency (RF) transmission in order to block or redirect the electromagnetic interference (EMI) generated by the metal layer.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
Fig. 1 shows a data carrier according to the invention in a cross section view;
Fig. 2 shows a zoom of a part of the data carrier of Fig. 1 in an exploded perspective view;
Fig. 3 shows a second data carrier according to the invention in a cross section view;

### DESCRIPTION OF PARTICULAR EMBODIMENTS

Aspects of the invention shall be further illustrated with reference to the figures.

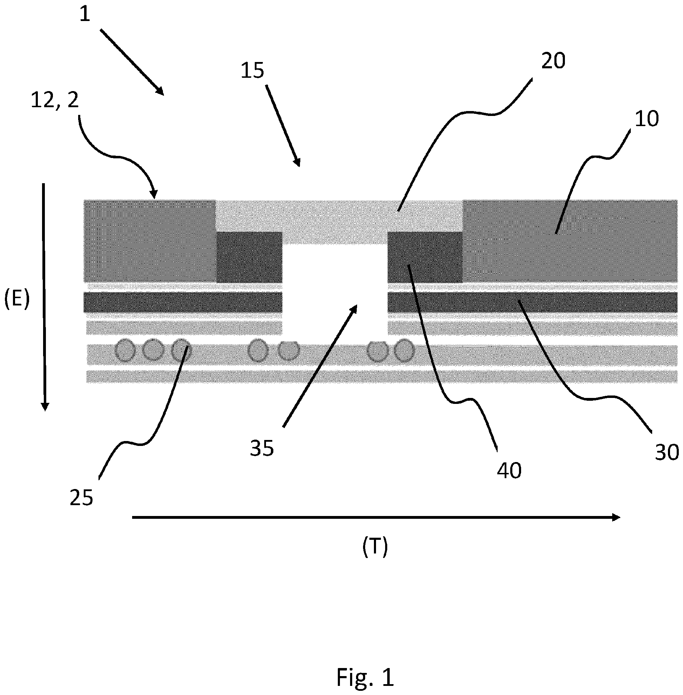

Figure 1 depicts a first data carrier 1 according to the invention in a cross-section view. The data carrier 1 comprises a metal layer 10 having an upper surface 12 defining the upper surface 2 of said data carrier 1. The metal layer comprises an opening 15 in which is positioned an electronic module 20. The electronic module 20 flushes the upper surface 2 of the data carrier 1. Said electronic module is an IC chip module. The data carrier 1 further comprises an antenna 25 and a shielding layer 30 disposed between the metal layer 10 and the antenna 25. Finally, the data carrier 1 comprises a shielding plug 40 disposed within the opening 15. In this first embodiment, the shielding plug 40 is made of shielding material. The shielding material is non electrically conductive. More particularly, the shielding plug 40 represented in figure 1 is made of ferrite. The shielding plug 40, due to the nature of the ferrite, is configured to interfere or impede with RF transmission in order to block or redirect the electromagnetic interference (EMI) generated by the metal layer. In that way, the shielding plug 40 reinforce the shielding effect of the shielding layer 30 by further preventing interferences that can be caused by the metal layer 10. By using a shielding plug 40 made of ferrite, the total mass of the data carrier 1 is also advantageously increased.

The data carrier 1 expands along an extension direction (E), corresponding to the thickness of the data carrier 1, and along a transverse direction (T) running perpendicularly to the extension direction (E).

The expansion area of the metal layer 10 corresponds to the expansion area of the data carrier 1 with respect to the transverse direction (T), such that the metal layer 10 covers the full surface of the data carrier 1. The metal layer 10 is therefore visible on the edge of the data carrier 1.

In the same way, the expansion area of the shielding layer 30 corresponds to the expansion area of the data carrier 1 with respect to the transverse direction (T), such that the shielding layer 30 covers the full surface of the data carrier 1.

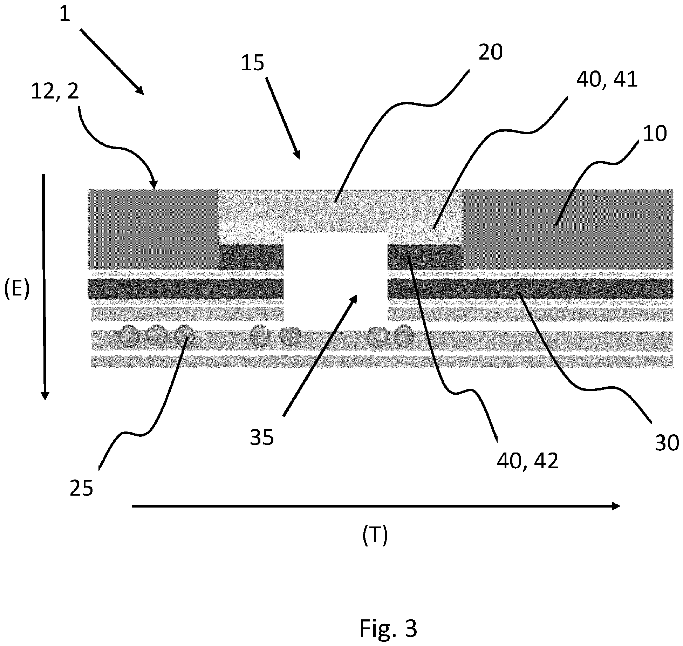

The data carrier 1 according to the invention is a multilayer structure that can comprise several other layers than the ones discussed in the present description. For example, the data carrier 1 represented at figures 1 and 3 comprises several other layers, notably adhesive layers and compensation layers, which are not numbered.

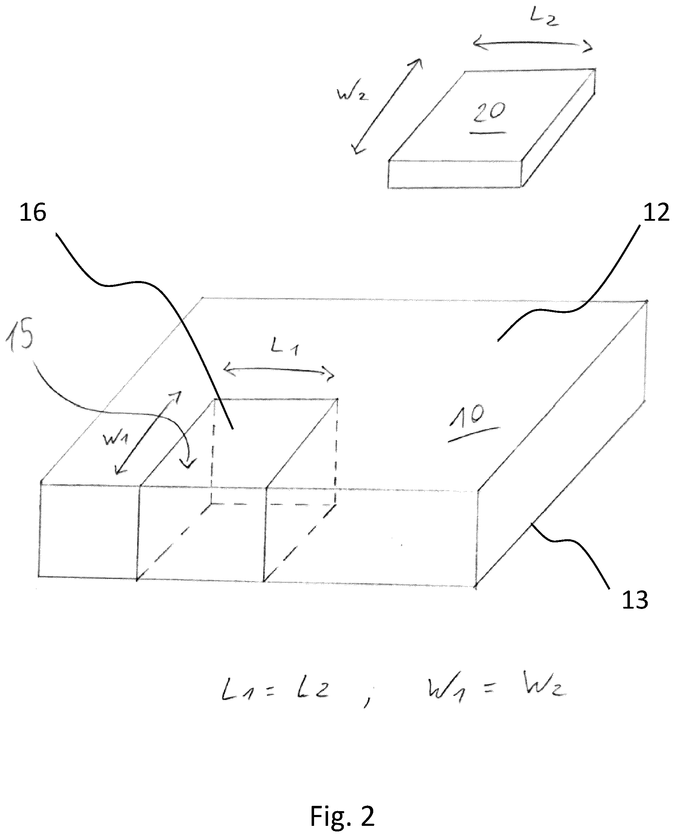

Figure 2 depicts a zoom of a part of the data carrier of Fig. 1 in an exploded perspective view. More particularly, figure 2 shows the metal layer 10 and the electronic module 20. The metal layer 10 comprises an upper surface 12, which forms the upper surface 2 of the data carrier 1, and a lower surface 13 facing the inside of the data carrier 1. The metal layer 10 comprises an opening 15 having lateral dimensions L1 W1. The opening 15 of the metal layer 10 reveals the metal side walls 16 or edge 16. The electronic module 20, intended to be positioned within the opening 15 of the metal layer 10, has lateral dimensions L2 W2. The lateral dimensions L1W1 of the opening 15 of the metal layer 10 are substantially equal to the lateral dimensions L2 W2 of the electronic module 20. Consequently, once inserted in the opening 15 of the metal layer 10, there is no gap between the electronic module 20 and the metal side walls 16 formed in the metal layer 10 by the opening 15. In other words, the size of the opening 15 of the metal layer 10 corresponds to the size of the electronic module 20 in its upper part, only a top surface of the electronic module 20 being left uncovered by the metal layer 10. Again in other words, an edge 16 of the metal layer 10 that delimits the opening 15 of the metal layer 10 is arranged immediately adjacent to a circumferential surface of the electronic module 20 in its upper region, such that there is no material from the shielding plug 40 separating the electronic module 20 from the metal layer 10 in the uppermost part of the electronic module 20.

Figure 3 depicts a second data carrier 1 according to the invention in a cross section view. In this embodiment, the shielding plug 40 comprises an upper part 41 on which is securely attached the electronic module 20 and a lower part 42 facing the inside of the data carrier 1. The upper part 41 is made of PVC and the lower part 42 is made of ferrite. The lower part 42 of the plug 40 being the part which is potentially more exposed to RF signals coming from the antenna, this configuration allows to focus the shielding of metal layer 10, more specifically the metal side walls 16 of the opening 15 in the metal layer 10, in the most critical part of it.

The upper part 41 of the shielding plug 40 is milled in order to house at least part of the electronic module 20 and securely attach it to the data carrier 1. Milling PVC is easier than milling ferrite. Therefore, such a configuration of the shielding plug 40 allows an easier manufacturing as the milling of PVC is easily controllable, and at the same time it allows a good RF protection as the lower part of the shielding plug, which is potentially more exposed to RF signals coming from the antenna, is in a shielding material. Furthermore, the visually critical part of the shielding plug 40 to mill is its upper part as it is this upper part which is visible to the end user, especially in a configuration where the electronic module flushes the upper surface 2 of the data carrier 1.

The lower part 42 of the shielding plug 40 comprising a shielding material has a thickness of at least 30 micrometer.

The shielding layer 30 comprises an opening 35 substantially aligned with the opening 15 of the metal layer 10 according to an extension direction (E) of the data carrier 1. This opening 35 of the shielding layer 30 allows to accommodate the physical connections between the electronic module 20 and the antenna 25. The connection means between the electronic module 20 and the antenna 25, which are not shown, can be for example wires or silver glue. This configuration allows a non-inductive mode of connection or physical connection mode between the antenna and the electronic module. The shielding plug 40 of the data carrier 1 is even more relevant for a configuration in which the shielding layer 30 has an opening 35 because said opening 35 constitutes a weak point in term of shielding.

## Claims

1. A data carrier (1) with a top surface and a bottom surface, said data carrier (1) comprising:
- a metal layer (10), said metal layer (10) comprising an opening (15);
- at least one electronic module (20) positioned at least partially within the opening (15);
- at least one antenna (25);
- at least one shielding layer (30) disposed between the metal layer (10) and the antenna (25); and
- a shielding plug (40) disposed within the opening (15);
wherein the shielding plug (40) comprises a shielding material such that it is configured to interfere or impede with radio-frequency (RF) transmission in order to block or redirect the electromagnetic interference (EMI) generated by the metal layer (10).

2. A data carrier (1) according to the preceding claim, wherein the shielding plug (40) material comprises ferromagnetic metal or ferromagnetic metal alloy.

3. A data carrier (1) according to any of the preceding claims, wherein the shielding plug (40) material comprises ferrite/PVC alloy.

4. A data carrier (1) according to any of the preceding claims, wherein the shielding plug (40) comprises an upper part (41) on which is securely attached the electronic module (20) and a lower part (42) facing the inside of the data carrier (1), at least the lower part (42) of the plug (40) comprising a shielding material.

5. A data carrier (1) according to claim 4, wherein the upper part (41) of the shielding plug (40) is made of polymer and the lower part (42) of the shielding plug (40) is made of ferrite.

6. A data carrier (1) according to claims 1 or 2, wherein the shielding plug (40) is made of ferrite.

7. A data carrier (1) according to any of the preceding claims, wherein the plug (40) has a density at least equal to 2 g/cm³.

8. A data carrier (1) according to any of the preceding claims, wherein the lateral dimensions L1 W1 of the opening (15) are substantially equal to the lateral dimensions L2 W2 of the electronic module (20) such that there is no gap between the electronic module (20) and an edge (16) formed in the metal layer (10) by the opening (15).

9. A data carrier (1) according to any of the preceding claims, wherein the shielding layer (30) comprises an opening (35) substantially aligned with the opening (15) of the metal layer (10) according to an extension direction (E) of the data carrier.

10. A data carrier (1) according to claim 9, wherein the antenna (25) is in physical connection with the electronic module (20).

11. A data carrier (1) according to any of the preceding claims, wherein an expansion area of the metal layer (10) corresponds to an expansion area of the data carrier (1) with respect to a transverse direction (T) running perpendicularly to an extension direction (E) of the data carrier (1).

12. A data carrier (1) according to any of the preceding claims, wherein an expansion area of the shielding layer (30) corresponds to an expansion area of the metal layer (10) with respect to a transverse direction (T) extending perpendicularly to the extension direction (E).

13. A data carrier (1) according to any of the preceding claims, wherein the metal layer (10) forms the top surface (2) of the data carrier (1).

14. A secure article (100) comprising or consisting of at least one data carrier (1) as claimed in any one of the preceding claims, wherein the secure article (100) preferably is a smart card.

15. A method of producing a data carrier (1), preferably a data carrier (1) as claimed in any one of claims 1 to 13, wherein the method comprises the steps of:
- providing a metal layer (10), said metal layer (10) comprising an opening (15);
- providing at least one electronic module (20) at least partially within the opening (15);
- providing at least one antenna (25);
- providing at least one shielding layer (30) between the metal layer (10) and the antenna (25); and
- providing a shielding plug (40) within the opening (15);
wherein the shielding plug (40) comprises a shielding material such that it is configured to interfere or impede with radiofrequency (RF) transmission in order to block or redirect the electromagnetic interference (EMI) generated by the metal layer (10).
